# FASCICULE DE BREVET EUROPEEN

(11) **EP 2 446 608 B1**
(45) Date de publication et mention de la délivrance du brevet: **31.07.2019**
(21) Numéro de dépôt: 10734258.6
(22) Date de dépôt: 17.06.2010
(51) Int. Cl.: H04L 29/08, H04L 29/06

(54) **TECHNIQUE DE CONTRÔLE D'ACCÈS PAR UNE ENTITÉ CLIENTE À UN SERVICE**
VERFAHREN FÜR DIE ZUGRIFFSKONTROLLE DURCH EINE CLIENT-EINHEIT AUF EINEN SERVER
TECHNIQUE OF ACCESS CONTROL BY A CLIENT ENTITY TO A SERVICE

(30) Priorité: 22.06.2009 FR 0954233
(43) Date de publication de la demande: 02.05.2012
(73) Titulaire: Orange, 75015 Paris (FR)
(72) Inventeur: RADIER, Benoît, F-22700 Perros Guirec (FR); SALAUN, Mikaël, F-29590 Rosnoen (FR); KLENK, Andreas, 71088 Holzgerlingen (DE); KLEIS, Michael, 10963 Berlin (DE)
(86) Numéro de dépôt international: PCT/FR2010/051212
(87) Numéro de publication internationale: WO 2010/149899

(56) Documents cités:
- LAVINAL E. ET AL: "A next-generation service overlay architecture" ANNALS OF TELECOMMUNICATIONS, vol. 64, no. 3-4, 16 janvier 2009 (2009-01-16), pages 175-185, XP002584144 ISSN: 1958-9395 DOI: 10.1007/s12243-008-0082-x
- Transnexus: "Secure, Multi-LAteral Peering with OpenSER 1.1.1" 1 juin 2007 (2007-06-01), XP002584145 Extrait de l'Internet: URL:http://www.transnexus.com/White%20Pape rs/White%20Papers.htm (via Google) [extrait le 2010-05-25]
- ANDREAS KLENK ET AL: "Towards Autonomic Service Control in Next Generation Networks" AUTONOMIC AND AUTONOMOUS SYSTEMS, 2008. ICAS 2008. FOURTH INTERNATIONAL CONFERENCE ON, IEEE, PISCATAWAY, NJ, USA, 16 mars 2008 (2008-03-16), pages 266-271, XP031242956 ISBN: 978-0-7695-3093-2 cité dans la demande

## Description

L'invention se situe dans le domaine des télécommunications et concerne notamment une technique de contrôle d'accès par une entité cliente à un service.

Dans un réseau de communication, plusieurs noeuds peuvent former un réseau de recouvrement et être ainsi connectés entre eux. Il s'agit par exemple d'un réseau de recouvrement de type "pair-à-pair", "peer to peer" en anglais, appelé par la suite réseau P2P. Dans un tel réseau de recouvrement, les noeuds, appelés pairs, sont indifférenciés et possèdent des capacités et des responsabilités équivalentes dans le réseau contrairement à une architecture de type client-serveur. Ce réseau de recouvrement ne s'appuie pas sur une infrastructure propre mais sur un ou plusieurs réseaux de communication déjà en place. Il en exploite les ressources mais sans en connaître nécessairement la topologie physique de ce ou de ces réseaux sous-jacents. Un réseau de communication est dit sous-jacent au réseau de recouvrement.

L'article intitulé "Towards Autonomie Service Control In Next Génération Networks" de A. Klenk et al. et publié à la conférence ICAS08 propose une méthode permettant d'introduire de façon autonome un service dans le réseau de recouvrement. Dans une première phase, un opérateur désireux d'offrir un accès au service et un fournisseur du service négocient, préalablement à la réception d'une première demande de mise en oeuvre du service, un contrat comportant au moins une contrainte pour la mise en oeuvre du service, appelé "Multimedia Transport Service Agreement", par exemple une contrainte de qualité de service. Cette première phase de négociation permet de décomposer une demande de service en une chaîne de fonctions élémentaires. Par exemple, de telles fonctions sont une fonction de transcodage de flux vidéo, une fonction de correction d'erreurs, une fonction de marquage en filigrane ou "watermarking",... Dans une deuxième phase, mise en oeuvre lorsqu'une requête d'accès au service est reçue en provenance d'une entité cliente, des noeuds disposant des modules de traitement nécessaires à la mise en oeuvre des fonctions élémentaires sont alors déterminés. Puis, en fonction du résultat de cette détermination, les interconnexions nécessaires entre les modules de traitement sont à leur tour déterminées en prenant en compte d'une part, la ou les contraintes pour la mise en oeuvre du service prévue(s) dans le contrat et d'autre part, les coûts de mise en oeuvre du service. Dans une troisième phase, le service va être fourni à l'entité cliente en utilisant les connexions entre les modules de traitement établies lors de la deuxième phase.

L'article intitulé « A Next-Generation Service Overlay Architecture » de E. Lavinal et al publié dans les Annales des Télécommunications (2008) décrit une solution permettant de mettre en oeuvre une architecture de services de recouvrement dans laquelle un chemin de niveau service est dynamiquement établi pour répondre aux besoins d'un client. La découverte des composants de service et l'administration du chemin de niveau service sont deux aspects traités dans ce papier. La
mise en oeuvre du chemin de service à partir des composants et son adaptation en cas de perturbations est réalisée à partir du protocole SIP.Toutefois, un des modules de traitement déterminés peut être protégé par un dispositif de contrôle d'accès. Le dispositif fournisseur du service peut également être protégé par un tel dispositif. L'entité cliente doit alors s'authentifier auprès de ces dispositifs avant de pouvoir utiliser les modules de traitement.

Le document "Secure, Multi-Lateral Peering with OpenSER 1.1.1" extrait de http://transnexus.com (05/2005) décrit une solution permettant de mettre en place une architecture de sécurisation de communications pair-à-pair en utilisant une architecture PKI (en anglais Public Key Infrastructure). Grâce à cette solution, des communications pair-à-pair, notamment de Voix sur IP (en anglais Internet Protocol) peuvent être établies au sein d'un groupe non défini de pairs SIP au moyen d'un serveur de peering.

Si l'accès par l'entité cliente à un des modules de traitement n'est pas autorisé, il n'est alors pas possible de fournir le service à l'entité cliente. L'entité cliente doit alors réitérer les différentes phases du procédé pour le même service ou bien sélectionner un nouveau service. De plus, les ressources ont été réservées pour ne pas être utilisées finalement.

Un des buts de l'invention est de remédier à des insuffisances/inconvénients de l'état de la technique et/ou d'y apporter des améliorations.

Selon un premier aspect, l'invention a pour objet un procédé de contrôle d'accès par une entité cliente à un service dans un réseau de communication selon la revendication 1.

Pour mettre en oeuvre le service vers l'entité cliente, une chaîne de fonctions élémentaires est prévue. Par fonction élémentaire, on entend par exemple une fonction de transcodage, de comptage, d'interception légale, de marquage par filigrane, ... Une telle fonction élémentaire est décrite par des paramètres d'entrée, une fonction, des paramètres de sortie. La chaîne de fonctions élémentaires représente alors un enchaînement de traitements à mettre en oeuvre à partir d'un dispositif fournisseur du service présentant certains paramètres de sortie vers l'entité cliente présentant certains paramètres d'entrée. Ces traitements sont mis en oeuvre par des modules de traitement du réseau de communication. Le procédé de contrôle d'accès repose sur une délégation au dispositif de contrôle d'accès primaire par les différents dispositifs d'accès secondaires pour la négociation de la relation de confiance entre ces derniers et l'entité cliente. Le dispositif de contrôle d'accès se charge alors de vérifier auprès des différents dispositifs de contrôle d'accès respectivement associés aux modules de traitement, s'il est possible d'utiliser le module de traitement pour mettre en oeuvre le service pour cette entité cliente. Cette vérification s'effectue à l'aide d'un jeton d'accès. Par jeton d'accès, on entend une preuve d'un accord entre deux parties. Dans le cas présent, il s'agit d'un accord entre l'entité cliente et le dispositif de contrôle d'accès principal, représentant l'opérateur permettant l'accès au service. Ainsi, si cela n'est pas possible pour un des modules de traitement, cette chaîne de modules de traitement ne va pas être réservée pour l'entité cliente. On évite ainsi une réservation de ressources dans le réseau de communication, dans les cas où l'accès par l'entité cliente à un ou plusieurs des modules de traitement n'est pas possible. Les demandes d'accès aux différents dispositifs de contrôle d'accès secondaires peuvent être envoyées en parallèle ou successivement. Il est à noter que certains modules de traitement peuvent ne pas être protégés par un dispositif secondaire. Par ailleurs, le jeton d'accès est transmis par le dispositif de contrôle d'accès principal, qui est localisé dans le réseau de l'opérateur permettant l'accès au service. Cette transmission s'effectue ainsi sur des liens généralement de grande capacité. Le dispositif de contrôle d'accès principal peut notamment disposer d'un lien de grande capacité lui permettant de dialoguer sur différents type de liens simultanément. Au contraire, selon la technique antérieure, l'entité cliente peut être connectée au réseau de communication par l'intermédiaire d'un réseau mobile sous-jacent. La négociation par l'entité cliente de jetons d'accès pour un accès aux différents dispositifs de contrôle d'accès secondaires associés aux modules de traitement peut entraîner une utilisation de ressources importante dans le réseau mobile sous-jacent. Ainsi, les étapes de contrôle d'accès auprès des différents modules de traitement, telles que mises en oeuvre par le procédé de contrôle d'accès, vont être effectuées plus rapidement et permettent de diminuer le temps nécessaire à la fourniture du service. Par ailleurs, le contrôle d'accès à la chaîne de modules de traitement étant effectué au préalable, on évite ainsi de répondre positivement à l'entité cliente suite à la requête d'accès au service qu'elle a transmise dans des cas où il n'est finalement pas possible pour l'entité cliente d'accéder à des ressources du réseau de communication.

Selon une caractéristique particulière, le procédé comprend en outre une étape de négociation de l'accès au service par l'entité cliente à l'issue de laquelle le jeton d'accès est généré, préalablement à la réception de la chaîne de modules de traitement.

L'étape de négociation prenant place avant l'étape de réception en provenance du noeud d'accès au service d'une chaîne de modules de traitement, il est alors possible en cas d'échec de refuser le service à l'entité cliente avant la mise en oeuvre de la réservation des ressources dans le réseau de communication. Ainsi, l'utilisation des ressources du réseau est optimisée.

Selon une autre caractéristique particulière, le jeton d'accès est certifié par le dispositif principal.

Ainsi, l'opérateur permettant l'accès au service se porte garant de l'entité cliente.

Selon une autre caractéristique particulière, la demande d'accès comprend en outre une demande d'autorisation d'un acheminement de données entre le module de traitement considéré et un module de traitement le précédant dans la chaîne et entre le module de traitement considéré et un module de traitement le suivant dans la chaîne.

Ainsi, le dispositif d'accès au module de traitement dispose des informations nécessaires à l'acheminement des données pour la fourniture du service.

Corrélativement, l'invention concerne également un procédé de détermination d'une chaîne de modules de traitement pour la fourniture d'un service à une entité cliente dans un réseau de communication selon la revendication 5.

En cas de refus par un des dispositifs d'accès, le noeud d'accès au service a alors la possibilité de déterminer une nouvelle chaîne de modules de traitement. Ainsi, un refus éventuel est détecté au plus tôt et permet d'obtenir après une ou plusieurs nouvelles itérations cette nouvelle chaîne permettant à l'entité cliente d'obtenir le service. Selon la technique antérieure, la seule possibilité offerte à l'entité cliente en cas de refus d'accès d'un des modules de traitement consiste à requérir de nouveau l'accès au service ou à requérir l'accès à un autre service.

Selon un deuxième aspect, l'invention a pour objet un dispositif de contrôle d'accès par une entité cliente à un service dans un réseau de communication selon la revendication 6.

Selon un troisième aspect, l'invention a pour objet un dispositif de détermination d'une chaîne de modules de traitement pour la fourniture d'un service à une entité cliente dans un réseau de communication selon la revendication 7.

Selon un quatrième aspect, l'invention a pour objet un système de détermination d'une chaîne de modules de traitement pour la fourniture d'un service à une entité cliente dans un réseau de communication selon la revendication 8.

Selon un cinquième aspect, l'invention a pour objet un programme d'ordinateur comportant des instructions pour la mise en oeuvre du procédé de contrôle d'accès selon la revendication 1 par un dispositif de contrôle d'accès, lorsque ce programme est exécuté par un processeur.

Selon un sixième aspect, l'invention a pour objet un programme d'ordinateur comportant des instructions pour la mise en oeuvre du procédé de détermination d'une chaîne de modules de traitement selon la revendication 5 par un dispositif de détermination, lorsque ce programme est exécuté par un processeur.

L'invention sera mieux comprise à l'aide de la description suivante d'un mode de réalisation particulier du procédé de l'invention, en référence aux dessins annexés sur lesquels :
- la figure 1 représente un système de détermination d'une chaîne de modules de traitement dans son environnement selon un mode particulier de réalisation de l'invention ;
- la figure 2 représente les étapes des procédés selon un mode particulier de réalisation de l'invention ;
- la figure 3 représente un dispositif de contrôle d'accès selon un mode particulier de réalisation de l'invention ;
- la figure 4 représente un dispositif de détermination d'une chaîne de modules de traitement selon un mode particulier de réalisation de l'invention.

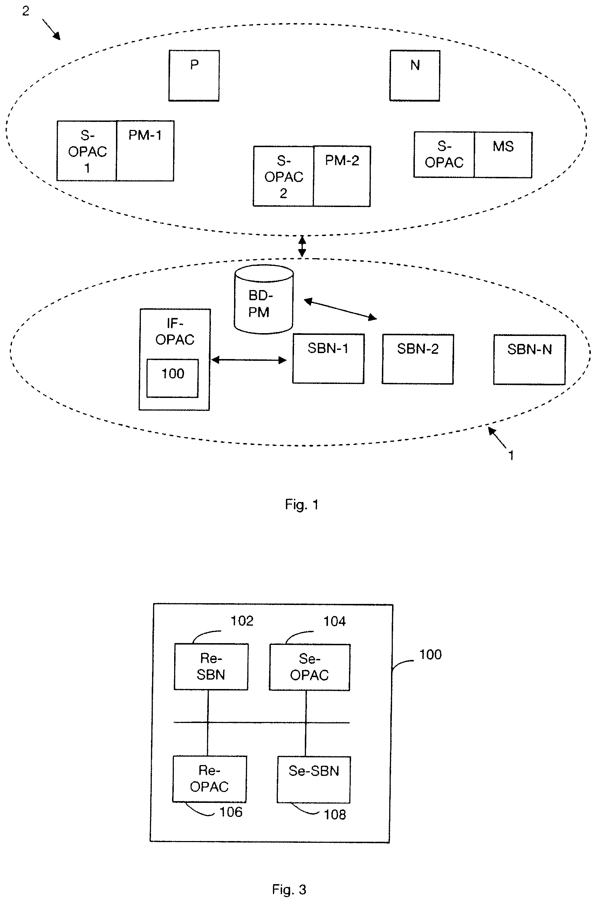

Un système 1 de détermination d'une chaîne de modules de traitement pour la fourniture d'un service à une entité cliente dans un réseau de communication 2 est représenté de façon schématique sur la figure 1. Un réseau de recouvrement est un réseau de communication particulier. Par la suite, on utilise indifféremment un terme ou l'autre. Le système 1 comprend une pluralité de noeuds d'accès au service, SBN-1, ..., SBN-N, pour « Service Bootstrap Node ». Un terminal N est représenté également sur la figure 1. Par la suite, on appelle entité cliente le terminal N ou l'utilisateur U de ce terminal N. Selon l'invention, le système 1 comprend également une entité de contrôle d'accès, noté IF-OPAC, pour « Interface Overlay Proxy Access Control », administrée par l'opérateur permettant un accès au service. Cette entité de contrôle d'accès IF-OPAC comprend notamment un dispositif 100 de contrôle d'accès par une entité cliente à un service. Le système 1 comprend également une base de données BD-PM, pour "Base de Données-Processing Module", mémorisant des modules de traitement mis à disposition par des entités du réseau de communication. Ces entités sont partiellement représentées sur la figure 1 et sont présentées plus précisément ultérieurement. Pour chaque module de traitement, est mémorisée une adresse dans le réseau de communication permettant d'accéder au module de traitement ainsi que des contraintes liées à cet accès. Cette base de données peut notamment prendre la forme d'une table de type DHT, pour "Distributed Hash Table". Optionnellement, la base de données BD-PM mémorise également une clé secrète partagée entre le dispositif de contrôle d'accès IF-OPAC et un dispositif de contrôle d'accès associé au module de traitement concerné.

Un portail P est également représenté et mémorise pour un service S donné, un identifiant du service SID et des adresses de noeuds d'accès au service SBN.

D'autres entités du réseau de recouvrement sont également partiellement représentées sur la figure 1, sous la forme d'une ressource PM-1, PM-2, MS mise à disposition dans le réseau de recouvrement et de dispositifs de contrôle d'accès respectifs associés S-OPAC1, S-OPAC2, S-OPAC. Chaque ressource ou module de traitement PM-1 et PM-2 représente des moyens particuliers permettant de mettre en oeuvre une fonction élémentaire dans le réseau de recouvrement. Pour ne pas surcharger la figure 1, seuls deux modules de traitement sont représentés. Il est bien entendu qu'une entité du réseau de recouvrement peut offrir un ou plusieurs modules de traitement. La ressource MS, pour "Module Service" est un module de traitement particulier, permettant d'offrir le service aux entités clientes du réseau de recouvrement. Comme exemple de service, on peut citer un service de diffusion de données multimédias, un service d'accès à des données de télésurveillance, un service de stockage de fichiers. Sur la figure 1, chaque module de traitement a un dispositif de contrôle d'accès associé. Il est bien entendu que des modules de traitement peuvent ne pas être protégés par un tel dispositif.

Pour permettre à l'entité cliente N d'accéder au service S, une chaîne de fonctions élémentaires TSID doit être déterminée. Selon l'article intitulé "Towards Autonomic Service Control In Next Génération Networks" de A. Klenk et al. et publié à la conférence ICAS08, cette chaîne de fonctions élémentaires est définie lors de la phase de négociation entre le fournisseur de service et le fournisseur du réseau de communication. A l'issue de la phase de négociation, le service est défini par :
- un identifiant de service unique SID ;
- un ensemble de fonctions élémentaires de traitement des données P_{SID} ;
- un ensemble de contraintes associées au service C_{SID}. Ces contraintes comprennent des paramètres associés au service et des autorisations d'accès au service. Les paramètres associés au service sont par exemple le lieu d'accès, l'instant d'accès, la manière d'accéder et des paramètres de qualité de service, tels que un coût maximum acceptable, un retard maximum acceptable, une bande passante requise, ... Les contraintes peuvent également être spécifiées entre les éléments de la chaine de traitement.

Cet ensemble d'informations, définissant le service identifié par l'identifiant de service SID, est appelé par la suite modèle de chaîne de traitement ou « Processing Chain Template ». Il s'agit d'une chaîne ordonnée de fonctions Pᵢ élémentaires.

Une fonction élémentaire de traitement de données est représentée sous la forme d'un triplet (I,P,O) où I représente des formats d'entrée que la fonction de traitement P peut traiter et O représente le format de sortie résultat de la mise en oeuvre de la fonction de traitement P. Lorsque n'importe quel format d'entrée est accepté, ceci est représenté par le caractère « * ».

Une fonction élémentaire Pᵢ est par exemple une fonction d'interception légale, une fonction de localisation, une fonction de marquage par filigrane, une fonction de transcodage, une fonction de cache, une fonction de translation d'adresse ou fonction NAT pour "Network Address Translation", une fonction d'inspection des paquets ou DPI pour "Deep Packet Inspection", une fonction de présence, une fonction de pont-conférence. Cette liste est bien entendu non exhaustive. Par la suite, cette chaîne de fonctions élémentaires est notée de la façon suivante :
(IM_{S},O_{MS})∼ (I,P₁,O)∼ (I,P₂,O)∼ ... (*,Pᵢ,,O)∼ (I_{MC},O_{MC})
où MS représente le service et MC l'entité cliente.

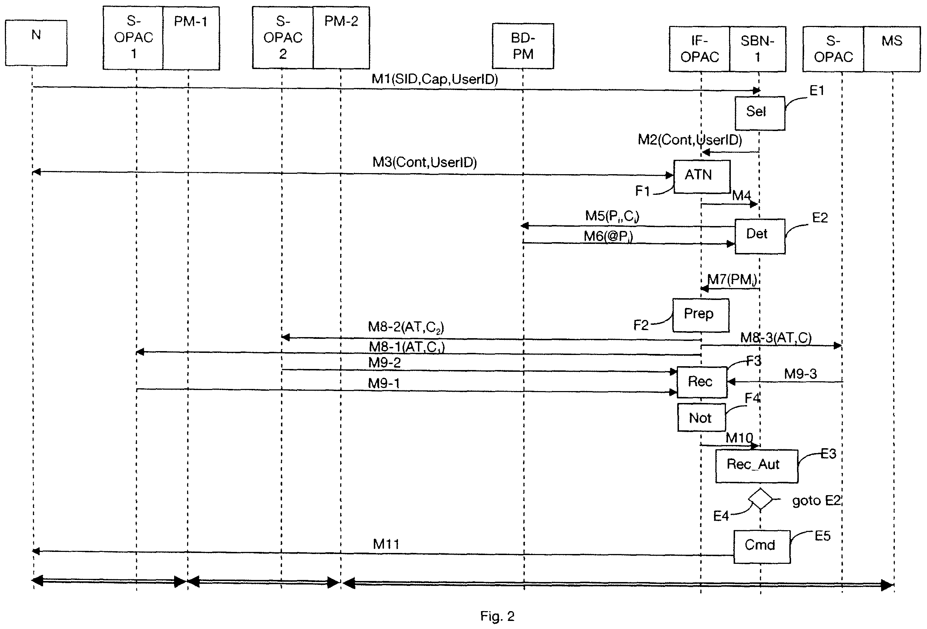

Le procédé de contrôle d'accès par une entité cliente à un service, tel que mis en oeuvre dans un mode particulier de réalisation par un dispositif de contrôle d'accès, et le procédé de détermination d'une chaîne de modules de traitement, tel que mis en oeuvre par un noeud d'accès au service dans ce mode particulier de réalisation, vont maintenant être décrits en relation avec la figure 2.

Une phase de négociation préalable est mise en oeuvre entre l'opérateur désireux d'offrir un accès au service et le fournisseur de service S et conduit à la définition d'un contrat Cont de service, comprenant un patron de chaîne de traitement, appelé par la suite chaîne de fonctions élémentaires.

L'entité cliente N souhaitant accéder à un service S, fourni par le module de traitement MS, contacte dans un premier temps le portail P afin d'obtenir l'identifiant au service SID et des adresses de noeuds d'accès au service SBN. Puis, l'entité cliente N sélectionne un noeud d'accès au service SBN-1 et transmet une requête d'accès M1 au service S à ce noeud d'accès sélectionné. Cette requête d'accès M1(SID, Cap, UserID) comprend un identifiant du service SID, des capacités Cap de l'entité cliente, un identifiant UserID de l'utilisateur de l'entité cliente.

La requête d'accès M1 est reçue par le noeud d'accès au service SBN-1 à une étape El du procédé de détermination. Toujours dans cette étape E1, le noeud d'accès au service SBN-1 recherche le contrat Cont associé à ce service, par exemple dans une base de données, et obtient ainsi une chaîne de fonctions élémentaires associée au service. Le noeud d'accès SBN-1 transmet alors un message M2 à l'entité de contrôle d'accès IF-OPAC. Le message M2(Cont,UserID) comprend le contrat tel que négocié entre l'opérateur permettant l'accès au service et le fournisseur du service S, ainsi que l'identifiant UserId de l'utilisateur de l'entité cliente.

Le message M2 est reçu par l'entité de contrôle d'accès IF-OPAC dans une étape F1 du procédé de contrôle d'accès. L'entité de contrôle d'accès IF-OPAC négocie avec l'entité cliente N un jeton d'accès au service AT ou « Access Token ». Cette négociation est matérialisée sur la figure 2 sous la forme d'une flèche portant un ensemble de message M3, comprenant le contrat Cont et l'identifiant UserID de l'utilisateur de l'entité cliente. Une telle négociation, appelée également ATN pour "Automatic Trust Négociation", est plus précisément décrite dans l'article "Secure Stateless Trust Negotiation" de A. Klenk et al. publié à la conférence N2S 2009. Elle permet de garantir que l'entité cliente N accepte bien les termes du contrat. Une relation de confiance est établie entre l'entité de contrôle d'accès IF-OPAC et l'entité cliente N. Cette relation de confiance est matérialisée par le jeton d'accès, définissant les conditions d'accès au module de traitement. Ce jeton d'accès peut prendre la forme d'une page établie conformément à une spécification de langage telle que XACML, pour « extensible Access Control Markup Language ».

Toujours dans cette étape F1 du procédé de contrôle d'accès, l'entité de contrôle d'accès IF-OPAC vérifie que l'utilisateur est bien celui qu'il dit être. Lorsque ces deux sous-étapes, de négociation et de vérification d'identité, sont accomplies avec succès, l'entité de contrôle d'accès IF-OPAC mémorise le jeton d'accès négocié AT et transmet au noeud d'accès au service SBN-1 un accord M4. Dans le cas contraire, c'est-à-dire lorsqu'une des deux sous-étapes a échoué, l'entité de contrôle d'accès transmet au noeud d'accès au service SBN-1 un refus, qui conduit ce dernier à rejeter la demande d'accès au service par l'entité cliente N. Ce rejet prend place avant la mise en oeuvre de la réservation des ressources dans le réseau de communication. Ainsi, l'utilisation des ressources du réseau est optimisée.

Le message M4 est reçu par le noeud d'accès au service SBN-1 dans une étape E2 du procédé de détermination. Il transmet alors à la base de données BD-PM une requête M5 pour rechercher dans le réseau de recouvrement des noeuds proposant les des modules de traitement PMᵢ, pour mettre en oeuvre les fonctions élémentaires requises et tels que les liaisons entre les différents noeuds permettent de respecter les contraintes Cᵢ associées à la chaîne de fonctions élémentaires. Le procédé met alors en oeuvre cette recherche, par exemple selon la méthode décrite dans l'article cité précédemment de la conférence ICAS08. Une fois une chaîne de modules de traitement déterminée, celle-ci est transmise dans un message de réponse M6 au noeud d'accès au service SBN-1. Le message de réponse M6 comprend notamment les adresses dans le réseau de communication respectives des modules de traitement. En option, lorsque la base de données BD-PM a mémorisé une clé secrète partagée entre un module de traitement et l'entité de contrôle d'accès IF-OPAC, celle-ci est également transmise dans le message de réponse M6.

La réponse M6 est reçue par le noeud d'accès au service SBN-1, toujours dans cette étape E2. Puis, le noeud d'accès SBN-1 transmet à l'entité de contrôle d'accès IF-OPAC un message M7 comprenant la chaîne de modules de traitement PMᵢ et les adresses de ces modules de traitement dans le réseau de recouvrement. Ce message M7 demande ainsi à l'entité de contrôle d'accès IF-OPAC de vérifier si les modules de traitement autorisent l'accès à l'entité cliente N. Dans le mode de réalisation décrit, le message M7 comprend la chaîne de modules de traitement (PM-1,PM-2,MS).

Le message M7 est reçu par l'entité de contrôle d'accès IF-OPAC dans une étape F2 du procédé de contrôle d'accès. L'entité de contrôle d'accès IF-OPAC transmet alors au dispositif de contrôle d'accès S-OPAC1 associé au module de traitement PM-1 un message M8-1 comprenant le jeton d'accès AT déterminé et mémorisé lors de l'étape F1 du procédé de contrôle d'accès ainsi que la ou les contraintes Cᵢ. Le message M8-1 demande une autorisation d'un acheminement des données en entrée et en sortie du module de traitement PM-1. Plus précisément, il précise également un numéro de port à utiliser pour communiquer entre deux modules de traitement ainsi que le protocole à utiliser. En option, lorsque la base de données BD-PM a mémorisé une clé secrète partagée entre le module de traitement PM-1 et l'entité de contrôle d'accès IF-OPAC, le jeton d'accès est certifié par l'entité de contrôle IF-OPAC à l'aide de cette clé secrète.

Par exemple, il est possible d'utiliser la spécification de langage XACML, pour certifier les informations transmises par l'entité cliente ou obtenues par un fournisseur d'identité tiers et sécuriser les transactions, tel que décrit dans l'article "Secure Stateless Trust Negotiation" de A. Klenk et al. publié à la conférence N2S 2009.

De même, un message M8-2 est transmis au dispositif de contrôle d'accès S-OPAC2 associé au module de traitement PM-2 et un message M8-3 au dispositif de contrôle d'accès S-OPAC3 associé à l'entité fournissant le service MS.

Ainsi, seule l'entité de contrôle d'accès IF-OPAC a négocié avec l'entité cliente N le jeton d'accès AT, ce dernier étant ensuite transmis ensuite aux différents modules de traitement. L'accès ultérieur de l'entité cliente N est ainsi simplifié puisqu'il n'est pas nécessaire pour l'entité cliente de négocier avec chacun des modules de traitement de la chaîne. L'entité cliente N tire ainsi bénéfice de la relation de confiance qui existe entre les dispositifs de contrôle d'accès S-OPAC associés aux modules de traitement et l'entité de contrôle d'accès IF-OPAC.

Le dispositif de contrôle d'accès S-OPAC1 vérifie si l'entité cliente N peut accéder au module de traitement PM-1.

Si l'entité cliente N ne peut pas accéder au module de traitement PM-1, le dispositif de contrôle d'accès S-OPAC1 transmet un message M9-1 indiquant un refus.

Si l'entité cliente N peut accéder au module de traitement PM-1, le dispositif de contrôle d'accès S-OPAC1 autorise un acheminement des données entre le module de traitement considéré et le module de traitement le précédant dans la chaîne de modules de traitements ainsi qu'entre le module de traitement considéré et le module de traitement le suivant dans la chaîne de modules de traitement. Le dispositif de contrôle d'accès S-OPAC1 réserve également les ressources nécessaires à la fourniture du service, telles que définies par la ou les contraintes Cl. Dans le mode de réalisation décrit, le dispositif de contrôle d'accès S-OPAC1 autorise un acheminement de données entre l'entité cliente N et le module de traitement PM-1, puis entre le module de traitement PM-1 et le module de traitement PM-2. Puis, le dispositif de contrôle d'accès S-OPAC1 transmet un message M9-1 indiquant un accord.

Il en est de même pour le dispositif de contrôle d'accès S-OPAC2, respectivement S-OPAC, qui transmet un message de réponse M9-2, respectivement M9-3, à l'entité de contrôle d'accès IF-OPAC.

Ces messages de réponse M9-1, M9-2, M9-3 sont reçus dans une étape F3 du procédé de contrôle d'accès.

Les messages M8-1, M8-2, M8-3 sont par exemple des messages « Authorization Request » selon la spécification de langage XACML. Les messages M9-1, M9-2, M9-3 sont par exemple des messages « Authorization Response », toujours selon cette même spécification.

Dans une étape F4 du procédé de contrôle d'accès, l'entité de contrôle IF-OPAC transmet au noeud d'accès au service SBN-1 un message M10 comprenant le résultat obtenu pour les vérifications effectuées. Si un des modules de traitement n'a pas accepté un accès par l'entité cliente N, le message M10 est un message de rejet de la chaîne de modules de traitement. Dans le cas contraire, c'est-à-dire si l'ensemble des modules de traitement de la chaîne a accepté l'accès de l'entité cliente N, le message M10 est un message d'accord de la chaîne de modules de traitement.

Le message M10 est reçu par le noeud d'accès au service SBN-1 dans une étape E3 du procédé de détermination. Si lors d'une étape E4 du procédé de détermination, on détermine qu'il s'agit d'un rejet, le procédé de détermination retourne à l'étape E2 afin de réitérer les étapes E2, E3, E4 du procédé. Ainsi, un refus par un des modules de traitement est détecté avant transmission à l'entité cliente N de la chaîne de modules de traitement et permet au système 1 de détermination de déterminer une nouvelle chaîne de modules de traitement. Selon la technique antérieure, dans un tel cas, des ressources ont été réservées pour ne pas être utilisées ensuite. De plus, l'entité cliente N doit ensuite transmettre une nouvelle requête d'accès au service ou bien sélectionner un nouveau service.

Il est possible de vérifier dans cette étape E4 du procédé de détermination que le nombre d'itérations effectuées en vue de déterminer une chaîne de modules de traitement est inférieur à un seuil prédéterminé. Ceci permet d'éviter de surcharger le système 1 de détermination et de limiter un temps d'attente de l'entité cliente N.

Si lors de l'étape E4 du procédé de détermination, on détermine qu'il s'agit d'un accord, c'est-à-dire qu'une chaîne de modules de traitement pour laquelle l'ensemble des modules de traitement accepte un accès de l'entité cliente N a été déterminée, le procédé de détermination transmet dans une étape E5 un message M11, comprenant l'adresse dans le réseau de recouvrement du premier module de traitement PM-1 et la ou les contraintes que l'entité cliente N doit respecter pour accéder au service. L'acheminement des données entre les différents modules de traitement ayant été autorisé et les ressources nécessaires à l'obtention de la qualité de service requise ayant été réservées, l'accès au service par l'entité cliente N peut alors s'effectuer. Ceci est matérialisé sur la figure 2 par des segments de doubles flèches, entre l'entité cliente N et le module de traitement PM-1, entre ce dernier et le module de traitement PM-2, puis pour finir entre ce dernier et l'entité fournissant le service. Grâce aux procédés selon l'invention, l'accès de l'entité cliente N s'effectue plus rapidement que selon la technique antérieure, étant donné que l'entité de contrôle d'accès IF-OPAC s'est portée garant pour l'entité cliente N vis-à-vis des dispositifs de contrôle d'accès. L'accès au service par l'entité cliente N va s'effectuer avec succès étant donné que l'ensemble des modules de traitement de la chaîne déterminée a donné son accord pour fournir le service.

Dans une variante au mode de réalisation décrit précédemment, l'entité de contrôle d'accès IF-OPAC peut ne pas demander la réservation des ressources entre les différents modules de traitement dans les messages M8-1, M8-2, M8-3. Dans cette variante, l'entité de contrôle IF-OPAC demande uniquement l'acheminement des données et le noeud d'accès au service SBN-1 demande aux modules de traitement de réserver les ressources lors de l'étape E5 du procédé de détermination avant envoi à l'entité cliente N du message M11. Cette variante présente l'avantage supplémentaire de rester compatible avec la méthode décrite dans l'article de la conférence ICAS08.

A titre d'exemple illustratif, la mise en oeuvre d'un service de télésurveillance d'un domicile à l'aide des procédés selon l'invention va maintenant être décrite. Il est bien entendu que le procédé ne se restreint pas à cet exemple.

La phase de négociation entre l'opérateur proposant un accès à des services et le fournisseur du service de télésurveillance a conduit à l'enregistrement d'un contrat de service, comprenant une chaîne de fonctions élémentaires, dans des moyens accédés par le noeud d'accès au service SBN-1. Le service publié met à disposition le service à des amis uniquement. Une entité cliente «alice@orange.fr» transmet une requête d'accès à ce service, comprenant ses propres caractéristiques.

L'entité de contrôle d'accès IF-OPAC vérifie lors de l'étape F2 en particulier auprès du dispositif de contrôle d'accès S-OPAC associé au dispositif proposant le service de télésurveillance que l'entité cliente N est bien autorisée à accéder au service. Le dispositif de contrôle d'accès S-OPAC vérifie que l'entité cliente « alice@orange.fr » fait bien partie des amis autorisés à accéder au service. Seul celui-ci est en mesure d'effectuer une telle vérification. De même, l'utilisation d'un module de traitement peut être réservée à des entités clientes présentant une adresse dans le domaine "brevet.fr". Lors de cette étape F2, l'entité de contrôle d'accès IF-OPAC peut vérifier avec le dispositif de contrôle d'accès concerné si l'accès par l'entité cliente est possible. La réponse peut ainsi être négative si le module de traitement ne souhaite pas offrir un accès aux entités clientes du domaine "orange.fr".

Un dispositif 100 de contrôle d'accès associé à un noeud d'accès à un service va maintenant être décrit en relation avec la figure 3.

Un tel dispositif 100 comprend :
- un module 102 de réception en provenance dudit noeud d'accès d'une chaîne de modules de traitement, destinés à être interconnectés dans ledit réseau en vue de la fourniture du service à l'entité cliente (N), un module de traitement mettant en oeuvre une fonction élémentaire d'une chaîne de fonctions élémentaires associée audit service ;
- un module 104 d'envoi à un autre dispositif de contrôle d'accès associé à un module de traitement de la chaîne, d'une demande d'accès au module de traitement considéré, ladite demande comprenant un jeton d'accès certifié par le dispositif principal ;
- un module 106 de réception en provenance de l'autre dispositif d'une réponse à la demande d'accès ;
- un module 108 de notification dudit noeud d'accès de la réponse reçue.

Les modules 104 et 106 sont en outre agencés pour négocier l'accès au service par l'entité cliente, générant ainsi à l'issue de la négociation le jeton d'accès.

Le module 104 est également agencé pour certifier le jeton d'accès à l'aide d'une clé secrète partagée entre lui-même et l'autre dispositif de contrôle d'accès.

Le dispositif 100 de contrôle d'accès est destiné à être intégré dans l'entité IF-OPAC de contrôle d'accès.

Le dispositif de contrôle d'accès 100 peut être intégré dans l'entité cliente fournissant le service, dans un pare-feu, dans une fonction de passerelle en frontière du réseau ou « Border Gateway Function ».

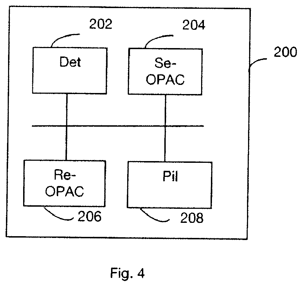

Un dispositif 200 de détermination d'une chaîne de modules de traitement tel que représenté sur la figure 4 comprend :
- un module 202 de détermination d'une chaîne de modules de traitement à partir d'une chaîne de fonctions élémentaires associée au service ;
- un module 204 d'envoi, agencés pour envoyer à un dispositif de contrôle d'accès, dit dispositif principal, associé audit noeud d'accès, la chaîne de modules de traitement déterminée ;
- un module 206 de réception en provenance du dispositif principal d'une notification comprenant au moins une réponse à une demande d'accès à un dispositif de contrôle d'accès associé à un module de traitement ;
- un module 208 de commande, agencé pour piloter les moyens de détermination en cas de refus d'accès à un des modules de traitement, afin de déterminer une nouvelle chaîne de modules de traitement.

Le dispositif 200 de détermination d'une chaîne de modules de traitement peut être intégré dans un noeud d'accès au service SBN-1,..., SBN-N.

Les modules 102, 104, 106, 108 sont agencés pour mettre en oeuvre le procédé de contrôle d'accès à un service précédemment décrit. Il s'agit de préférence de modules logiciels comprenant des instructions logicielles pour faire exécuter les étapes du procédé de contrôle d'accès précédemment décrit, mises en oeuvre par le dispositif de contrôle d'accès. L'invention concerne donc aussi :
- un programme pour un dispositif de contrôle d'accès à un service, comprenant des instructions de code de programme destinées à commander l'exécution des étapes du procédé de contrôle d'accès précédemment décrit, lorsque ledit programme est exécuté par ledit dispositif ;
- un support d'enregistrement lisible par un dispositif de contrôle d'accès à un service sur lequel est enregistré le programme pour un dispositif.

Les modules 202, 204, 206, 208 sont agencés pour mettre en oeuvre le procédé de détermination d'une chaîne de modules de traitement précédemment décrit. Il s'agit de préférence de modules logiciels comprenant des instructions logicielles pour faire exécuter les étapes du procédé de détermination précédemment décrit, mises en oeuvre par le dispositif de détermination d'une chaîne de modules de traitement. L'invention concerne donc aussi :
- un programme pour un dispositif de détermination d'une chaîne de modules de traitement, comprenant des instructions de code de programme destinées à commander l'exécution des étapes du procédé de détermination précédemment décrit, lorsque ledit programme est exécuté par ledit dispositif ;
- un support d'enregistrement lisible par un dispositif de détermination d'une chaîne de modules de traitement sur lequel est enregistré le programme pour un dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également le système 1 de traitement d'une requête d'accès à un service par une entité cliente N comprenant au moins un dispositif de détermination SBN-1,SBN-N,200 d'une chaîne de modules de traitement et un dispositif IF-OPAC, 100 de contrôle d'accès, tels que décrits précédemment.

## Revendications

1. Procédé de contrôle d'accès par une entité cliente (N) à un service dans un réseau de communication, des modules de traitement (PM-1, PM-2) étant destinés à être interconnectés dans ledit réseau en vue de la fourniture du service à l'entité cliente, un module de traitement mettant en oeuvre une fonction élémentaire d'une chaîne de fonctions élémentaires associée audit service, ledit procédé comprenant les étapes suivantes mises en oeuvre par un dispositif (IF-OPAC, 100) de contrôle d'accès associé à un noeud d'accès (SBN-1, SBN-N) audit service, dit dispositif principal :
- une étape (F2) de réception en provenance dudit noeud d'accès d'une demande (M7) de contrôle d'accès à au moins un module de traitement d'une chaîne de modules de traitement, ladite chaîne étant comprise dans la demande ;
- une étape (F2) d'envoi à un dispositif de contrôle d'accès (S-OPAC1, S-OPAC2, S-OPAC), dit dispositif secondaire, associé à un module de traitement de la chaîne, d'une demande d'accès (M8-1, M8-2, M8-3) au module de traitement considéré, ladite demande comprenant un jeton d'accès négocié entre le dispositif principal et l'entité cliente ;
- une étape (F3) de réception en provenance du dispositif secondaire d'une réponse (M9-1, M9-2, M9-3) à la demande d'accès ;
- une étape (F4) d'envoi d'une notification (M10) audit noeud d'accès comprenant au moins la réponse reçue du dispositif secondaire.

2. Procédé selon la revendication 1, comprenant en outre une étape (F1) de négociation de l'accès au service par l'entité cliente à l'issue de laquelle le jeton d'accès est généré, préalablement à la réception de la chaîne de modules de traitement.

3. Procédé selon la revendication 1, dans lequel le jeton d'accès est certifié par le dispositif principal.

4. Procédé selon la revendication 1, dans lequel la demande d'accès comprend en outre une demande d'autorisation d'un acheminement de données entre le module de traitement considéré et un module de traitement le précédant dans la chaîne et entre le module de traitement considéré et un module de traitement le suivant dans la chaîne.

5. Procédé de détermination d'une chaîne de modules de traitement pour la fourniture d'un service à une entité cliente (N) dans un réseau de communication, les modules de traitement (PM-1, PM-2) étant destinés à être interconnectés dans le réseau en vue de la fourniture du service à l'entité cliente (N), un module de traitement mettant en oeuvre une fonction élémentaire d'une chaîne de fonctions élémentaires associée au service, ledit procédé comprenant les étapes suivantes mises en oeuvre par un noeud d'accès audit service :
- une étape (E2) de détermination d'une chaîne de modules de traitement à partir de la chaîne de fonctions élémentaires associée au service ;
- une étape (E2) d'envoi à un dispositif de contrôle d'accès (IF-OPAC) associé audit noeud d'accès, dit dispositif principal, d'une demande (M7) de contrôle d'accès à au moins un module de traitement de la chaîne de modules de traitement déterminée, ladite chaîne étant comprise dans la demande ;
- une étape (E3) de réception en provenance du dispositif principal d'une notification (M10) comprenant au moins une réponse à une demande d'accès à un dispositif de contrôle d'accès associé à un module de traitement ;
les étapes du procédé de détermination étant destinées à être réitérées en cas de refus d'accès à un des modules de traitement.

6. Dispositif (IF-OPAC, 100) de contrôle d'accès par une entité cliente à un service dans un réseau de communication, ledit dispositif de contrôle d'accès étant associé à un noeud d'accès audit service et comprenant :
- des moyens (102) de réception en provenance dudit noeud d'accès d'une demande de contrôle d'accès à au moins un module de traitement d'une chaîne de modules de traitement comprise dans la demande, les modules de traitement étant destinés à être interconnectés dans ledit réseau en vue de la fourniture du service à l'entité cliente (N), un module de traitement mettant en oeuvre une fonction élémentaire d'une chaîne de fonctions élémentaires associée audit service ;
- des moyens (104) d'envoi à un autre dispositif de contrôle d'accès associé à un module de traitement de la chaîne, d'une demande d'accès au module de traitement considéré, ladite demande comprenant un jeton d'accès certifié par le dispositif principal ;
- des moyens (106) de réception en provenance de l'autre dispositif d'une réponse à la demande d'accès ;
- des moyens (108) d'envoi d'une notification audit noeud d'accès comprenant au moins la réponse reçue de l'autre dispositif.

7. Dispositif (200) de détermination d'une chaîne de modules de traitement pour la fourniture d'un service à une entité cliente dans un réseau de communication, les modules de traitement étant destinés à être interconnectés dans le réseau en vue de la fourniture du service à l'entité cliente (N), un module de traitement mettant en oeuvre une fonction élémentaire d'une chaîne de fonctions élémentaires associée au service, ledit dispositif comprenant :
- des moyens (202) de détermination d'une chaîne de modules de traitement à partir d'une chaîne de fonctions élémentaires associée au service ;
- des moyens (204) d'envoi, agencés pour envoyer à un dispositif de contrôle d'accès, dit dispositif principal, associé audit noeud d'accès, une demande de contrôle d'accès à au moins un module de traitement de la chaîne de modules de traitement déterminée, ladite chaîne étant comprise dans la demande ;
- des moyens (206) de réception en provenance du dispositif principal d'une notification comprenant au moins une réponse à une demande d'accès à un dispositif de contrôle d'accès associé à un module de traitement ;
- des moyens (208) de commande, agencés pour piloter les moyens de détermination en cas de refus d'accès à un des modules de traitement, afin de déterminer une nouvelle chaîne de modules de traitement.

8. Système (1) de détermination d'une chaîne de modules de traitement pour la fourniture d'un service à une entité cliente dans un réseau de communication, les modules de traitement étant destinés à être interconnectés dans le réseau en vue de la fourniture du service à l'entité cliente (N), un module de traitement mettant en oeuvre une fonction élémentaire d'une chaîne de fonctions élémentaires associée au service, ledit système comprenant au moins un dispositif de détermination selon la revendication 7 et un dispositif (IF-OPAC, 100) de contrôle d'accès associé audit dispositif de détermination selon la revendication 6.

9. Programme d'ordinateur comportant des instructions pour la mise en oeuvre du procédé de contrôle d'accès selon la revendication 1 par un dispositif de contrôle d'accès, lorsque ce programme est exécuté par un processeur.

10. Programme d'ordinateur comportant des instructions pour la mise en oeuvre du procédé de détermination d'une chaîne de modules de traitement selon la revendication 5 par un dispositif de détermination, lorsque ce programme est exécuté par un processeur.

## Patentansprüche

1. Verfahren zur Kontrolle von Zugang auf einen Dienst in einem Kommunikationsnetzwerk durch eine Client-Einheit (N), wobei Verarbeitungsmodule (PM-1, PM-2) dazu bestimmt sind, in dem Netzwerk zwecks der Bereitstellung des Dienstes an die Client-Einheit miteinander verbunden zu sein, wobei ein Verarbeitungsmodul eine elementare Funktion einer Kette elementarer Funktionen ausführt, die mit dem Dienst in Verbindung steht, das Verfahren umfassend die folgenden Schritte, die von einer Vorrichtung (IF-OPAC, 100) zur Zugangskontrolle ausgeführt wird, die mit einem Zugangsknoten (SBN-1, SBN-N) zu dem Dienst in Verbindung steht, die als Hauptvorrichtung bezeichnet wird:
- einen Schritt (F2) des Empfangens, von dem Zugangsknoten, einer Anforderung (M7) zur Kontrolle von Zugang auf mindestens ein Verarbeitungsmodul einer Kette von Verarbeitungsmodulen, wobei die Kette in der Anforderung enthalten ist;
- einen Schritt (F2) des Sendens einer Anforderung von Zugang (M8-1, M8-2, M8-3) auf das betrachtete Verarbeitungsmodul an eine Vorrichtung zur Zugangskontrolle (S-OPAC1, S-OPAC2, S-OPAC), die als Sekundärvorrichtung bezeichnet wird, wobei die Anforderung einen Zugangstoken umfasst, der zwischen der Hauptvorrichtung und der Client-Einheit ausgehandelt wird;
- einen Schritt (F3) des Empfangens einer Antwort (M9-1, M9-2, M9-3) auf die Anforderung von Zugang von der Sekundärvorrichtung;
- einen Schritt (F4) des Sendens einer Benachrichtigung (M10) an den Zugangsknoten, umfassend zumindest die Antwort, die von der Sekundärvorrichtung erhalten wurde.

2. Verfahren nach Anspruch 1, ferner umfassend einen Schritt (F1) des Aushandelns des Zugangs auf den Dienst durch die Client-Einheit, nach welcher der Zugangstoken erzeugt wird, vor dem Empfang der Kette von Verarbeitungsmodulen.

3. Verfahren nach Anspruch 1, wobei der Zugangstoken von der Hauptvorrichtung zertifiziert wird.

4. Verfahren nach Anspruch 1, wobei die Anforderung von Zugang ferner eine Anforderung zur Erlaubnis einer Übermittlung von Daten zwischen dem betrachteten Verarbeitungsmodul und dem Verarbeitungsmodul, das ihm in der Kette vorangeht, und zwischen dem betrachteten Verarbeitungsmodul und einem Verarbeitungsmodul, das ihm in der Kette folgt, umfasst.

5. Verfahren zum Bestimmen einer Kette von Verarbeitungsmodulen für die Bereitstellung eines Dienstes an eine Client-Einheit (N) in einem Kommunikationsnetzwerk, wobei die Verarbeitungsmodule (PM-1, PM-2) dazu bestimmt sind, in dem Netzwerk zwecks der Bereitstellung des Dienstes an die Client-Einheit (N) miteinander verbunden zu sein, wobei ein Verarbeitungsmodul eine elementare Funktion einer Kette elementarer Funktionen ausführt, die mit dem Dienst in Verbindung steht, das Verfahren umfassend die folgenden Schritte, die von einem Zugangsknoten zu dem Dienst ausgeführt werden:
- einen Schritt (E2) des Bestimmens einer Kette von Verarbeitungsmodulen anhand der Kette elementarer Funktionen, die mit dem Dienst in Verbindung steht;
- einen Schritt (E2) des Sendens einer Anforderung (M7) zur Kontrolle von Zugang auf mindestens ein Verarbeitungsmodul der bestimmten Kette von Verarbeitungsmodulen an eine Vorrichtung zur Kontrolle von Zugang (IF-OPAC), die mit dem Zugangsknoten in Verbindung steht, die als Hauptvorrichtung bezeichnet wird, wobei die Kette in der Anforderung enthalten ist;
- einen Schritt (E3) des Empfangens, von der Hauptvorrichtung, einer Benachrichtigung (M10) umfassend mindestens eine Antwort auf eine Anforderung von Zugang auf eine Vorrichtung zur Kontrolle von Zugang, die mit einem Verarbeitungsmodul in Verbindung steht;
wobei die Schritte des Verfahrens zum Bestimmen dazu bestimmt sind, im Falle einer Ablehnung von Zugang auf eins der Verarbeitungsmodule wiederholt zu werden.

6. Vorrichtung (IF-OPAC, 100) zur Kontrolle von Zugang auf einen Dienst in einem Kommunikationsnetzwerk durch eine Client-Einheit, wobei die Vorrichtung zur Kontrolle von Zugang mit einem Zugangsknoten zu dem Dienst in Verbindung steht und Folgendes umfasst:
- Mittel (102) zum Empfangen, von dem Zugangsknoten, einer Anforderung zur Kontrolle von Zugang auf mindestens ein Verarbeitungsmodul einer Kette von Verarbeitungsmodulen, die in der Anforderung enthalten ist, wobei die Verarbeitungsmodule dazu bestimmt sind, in dem Netzwerk zwecks der Bereitstellung des Dienstes an die Client-Einheit (N) miteinander verbunden zu sein, wobei ein Verarbeitungsmodul eine elementare Funktion einer Kette elementarer Funktionen ausführt, die mit dem Dienst in Verbindung steht;
- Mittel (104) zum Senden einer Anforderung von Zugang auf das betrachtete Verarbeitungsmodul an eine andere Vorrichtung zur Zugangskontrolle, die mit einem Verarbeitungsmodul der Kette in Verbindung steht, wobei die Anforderung einen Zugangstoken umfasst, der von der Hauptvorrichtung zertifiziert ist;
- Mittel (106) zum Empfangen einer Antwort auf die Anforderung von Zugang von der anderen Vorrichtung;
- Mittel (108) zum Senden einer Benachrichtigung an den Zugangsknoten, umfassend zumindest die Antwort, die von der anderen Vorrichtung erhalten wurde.

7. Vorrichtung (200) zum Bestimmen einer Kette von Verarbeitungsmodulen für die Bereitstellung eines Dienstes an eine Client-Einheit in einem Kommunikationsnetzwerk, wobei die Verarbeitungsmodule dazu bestimmt sind, in dem Netzwerk zwecks der Bereitstellung des Dienstes an die Client-Einheit (N) miteinander verbunden zu sein, wobei ein Verarbeitungsmodul eine elementare Funktion einer Kette elementarer Funktionen ausführt, die mit dem Dienst in Verbindung steht, die Vorrichtung umfassend:
- Mittel (202) zum Bestimmen einer Kette von Verarbeitungsmodulen anhand einer Kette elementarer Funktionen, die mit dem Dienst in Verbindung steht;
- Mittel (204) zum Senden, die dafür eingerichtet sind, eine Anforderung zur Kontrolle von Zugang auf mindestens ein Verarbeitungsmodul der bestimmten Kette von Verarbeitungsmodulen an eine Vorrichtung zur Kontrolle von Zugang zu senden, die mit dem Zugangsknoten in Verbindung steht, die als Hauptvorrichtung bezeichnet wird, wobei die Kette in der Anforderung enthalten ist;
- Mittel (206) zum Empfangen, von der Hauptvorrichtung, einer Benachrichtigung umfassend mindestens eine Antwort auf eine Anforderung von Zugang auf eine Vorrichtung zur Kontrolle von Zugang, die mit einem Verarbeitungsmodul in Verbindung steht;
- Steuerungsmittel (208), die dafür eingerichtet sind, die Mittel zum Bestimmen im Falle einer Ablehnung von Zugang auf eins der Verarbeitungsmodule zu steuern, um eine neue Kette von Verarbeitungsmodulen zu bestimmen.

8. System (1) zum Bestimmen einer Kette von Verarbeitungsmodulen für die Bereitstellung eines Dienstes an eine Client-Einheit in einem Kommunikationsnetzwerk, wobei die Verarbeitungsmodule dazu bestimmt sind, in dem Netzwerk zwecks der Bereitstellung des Dienstes an die Client-Einheit (N) miteinander verbunden zu sein, wobei ein Verarbeitungsmodul eine elementare Funktion einer Kette elementarer Funktionen ausführt, die mit dem Dienst in Verbindung steht, das System umfassend mindestens eine Vorrichtung zum Bestimmen nach Anspruch 7 und eine Vorrichtung (IF-OPAC, 100) zur Kontrolle von Zugang, die mit der Vorrichtung zum Bestimmen nach Anspruch 6 in Verbindung steht.

9. Computerprogramm, das Anweisungen für die Durchführung des Verfahrens zur Kontrolle von Zugang nach Anspruch 1 durch eine Vorrichtung zur Zugangskontrolle, wenn dieses Programm von einem Prozessor ausgeführt wird, aufweist.

10. Computerprogramm, das Anweisungen für die Durchführung des Verfahrens zum Bestimmen einer Kette von Verarbeitungsmodulen nach Anspruch 5 durch eine Vorrichtung zum Bestimmen, wenn dieses Programm von einem Prozessor ausgeführt wird, aufweist.

## Claims

1. Method of access control by a client entity (N) to a service in a communication network, processing modules (PM-1, PM-2) being intended to be interconnected in said network for the purpose of providing the service to the client entity, a processing module implementing an elementary function of a chain of elementary functions associated with said service, said method comprising the following steps implemented by an access control device (IF-OPAC, 100) associated with an access node to said service (SBN-1, SBN-N), called the main device:
- a step (F2) of receiving from said access node a request (M7) for control of access to at least one processing module of a chain of processing modules, said chain being comprised in the request;
- a step (F2) of sending to an access control device (S-OPAC1, S-OPAC2, S-OPAC), called a secondary device, associated with a processing module of the chain, a request (M8-1, M8-2, M8-3) for access to the processing module in question, said request comprising an access token negotiated between the main device and the client entity;
- a step (F3) of receiving from the secondary device a response (M9-1, M9-2, M9-3) to the access request;
- a step (F4) of sending a notification (M10) to said access node comprising at least the response received from the secondary device.

2. Method according to Claim 1, comprising moreover a step (F1) of negotiation of the access to the service by the client entity at the end of which the access token is generated, prior to the reception of the chain of processing modules.

3. Method according to Claim 1, **characterized in that** the access token is certified by the main device.

4. Method according to Claim 1, **characterized in that** the access request comprises moreover a request for authorization of a data route between the processing module in question and a processing module preceding it in the chain and between the processing module in question and a processing module following it in the chain.

5. Method for determining a chain of processing modules for the provision of a service to a client entity (N) in a communication network, the processing modules (PM-1, PM-2) being intended to be interconnected in the network for the purpose of providing the service to the client entity (N), a processing module implementing an elementary function of a chain of elementary functions associated with the service, said method comprising the following steps implemented by an access node to said service:
- a step (E2) of determination of a chain of processing modules from the chain of elementary functions associated with the service;
- a step (E2) of sending to an access control device (IF-OPAC) associated with said access node, called the main device, a request (M7) for control of access to at least one processing module of the determined chain of processing modules, said chain being comprised in the request;
- a step (E3) of receiving from the main device a notification (M10) comprising at least a response to a request for access to an access control device associated with a processing module;
the steps on the determination method being intended to be reiterated in the case of a refusal of access to one of the processing modules.

6. Device (IF-OPAC, 100) for controlling access by a client entity to a service in a communication network, said access control device being associated with an access node to said service and comprising:
- means (102) for receiving from said access node a request to control access to at least one processing module of a chain of processing modules comprised in the request, the processing modules being intended to be interconnected in said network for the purpose of providing the service to the client entity (N), a processing module implementing an elementary function of a chain of elementary functions associated with said service;
- means (104) of sending to another access control device associated with a processing module of the chain a request for access to the processing module in question, said request comprising an access token certified by the main device;
- means (106) of receiving from the other device a response to the access request;
- means (108) of sending a notification to said access node comprising at least the response received from the other device.

7. Device (200) for determining a chain of processing modules for the provision of a service to a client entity in a communication network, the processing modules being intended to be interconnected in the network for the purpose of providing the service to the client entity (N), a processing module implementing an elementary function of a chain of elementary functions associated with the service, said device comprising:
- means (202) of determining a chain of processing modules from a chain of elementary functions associated with the service;
- sending means (204), arranged for sending to an access control device, called the main device, associated with said access node, a request to control access to at least one processing module of the determined chain of processing modules, said chain being comprised in the request;
- means (206) of receiving from the main device a notification comprising at least a response to a request for access to an access control device associated with a processing module;
- control means (208), arranged to control the determination means in the case of refusal of access to one of the processing modules, in order to determine a new chain of processing modules.

8. System (1) for determining a chain of processing modules for the provision of a service to a client entity in a communication network, the processing modules being intended to be interconnected in the network for the purpose of providing the service to the client entity (N), a processing module implementing an elementary function of a chain of elementary functions associated with the service, said system comprising at least a determination device according to Claim 7 and an access control device (IF-OPAC, 100) associated with said determination device according to Claim 6.

9. Computer program comprising instructions for the implementation of the access control method according to Claim 1 by an access control device, when this program is executed by a processor.

10. Computer program comprising instructions for the implementation of the method for determining a chain of processing modules according to Claim 5 by a determination device, when this program is executed by a processor.
